(19) Europäisches Patentamt
European Patent Office
Office européen des brevets

(11) Publication number: **0 507 412 A1**

## (12) EUROPEAN PATENT APPLICATION

(21) Application number: **92200927.9**

(22) Date of filing: **01.04.92**

(51) Int. Cl.5: **C08L 77/00**, C08L 67/02

(30) Priority: **05.04.91 NL 9100589**

(43) Date of publication of application:
**07.10.92 Bulletin 92/41**

(84) Designated Contracting States:
**AT BE CH DE DK ES FR GB GR IT LI NL PT SE**

(71) Applicant: **DSM N.V.**
**Het Overloon 1**
**NL-6411 TE Heerlen(NL)**

(72) Inventor: **Bots, Joannes Gerardus Franciscus**
**Ingenopestraat 6**
**NL-6241 BZ Meerssen(NL)**
Inventor: **Statnik, Wilhelmus Hubertus**
**Jozephus Maria**
**Prof. Mentenlaan 37**
**NL-6141 LN Sittard(NL)**

(54) **Polyamide-polyethylene terephthalate composition.**

(57) The invention relates to a polyamide-polyethylene terephthalate composition comprising:
A. 5-95 parts by weight of polyamide 4.6
B. 95-5 parts by weight of polyethylene terephthalate and 1-100 wt. %, relative to A + B, of reinforcing fibre material.
The composition is eminently suitable for the production of structural parts, for instance a splash shield for a car. The composition exhibits better mechanical properties than may be expected on the basis of the separate components. For example, the high tensile modulus of the composition is quite remarkable.

EP 0 507 412 A1

The invention relates to a polyamide-polyethylene terephthalate composition (PA/PET) that is suitable for use in structural parts, for instance for cars.

Requirements to be met by such structural parts are a high stiffness, also at the temperatures prevailing in the direct vicinity of an internal-combustion engine, a good impact strength and a good chemical resistance and dimensional stability at different weather conditions.

Another technical requirement to be met by the composition is that it must exhibit good flow properties during processing, rendering it possible to produce parts having a high length/thickness ratio by, for instance, injection moulding.

However, the main field of application being car construction, economic requirements also play a very big role. For this reason, most of the high-quality plastics are not suitable for this application. On the basis of its particularly good physical properties at elevated temperatures, of the polyamides especially polyamide 4.6, polytetramethylene adipamide, is suitable.

EP-A-0340818 and EP-A-0335014 disclose particularly suitable forms of polyamide 4.6 compositions for use in the formation of structural parts. However, these known compositions have the drawback that the cost price is relatively high, in part because of the extra heat treatment. For these reasons an attempt has been made to find a polyamide 4.6 composition that still has the properties appropriate for its application in structural parts while offering major cost price advantages because it is blended with a lower grade material, preferably a material becoming available as waste or recyclable material.

Most surprisingly it has been found that the use of polyethylene terephthalate as third component in fibre-reinforced polyamide 4.6 yields a material whose properties in some critical aspects are even better than those of the polyamide 4.6 with fibre reinforcement. From EP-A-0382277, for instance, a composition of polyamide 4.6 with polyamide 6 is known. However, the values found for the properties of this mixture, in particular the stiffness, are lower than one would expect on the basis of the separate components. Polyamide 4.6/PET mixtures likewise have a stiffness that is considerably lower than that of polyamide 4.6 by itself, while no homogeneous composition can be produced without the presence of a compatibilizer. Therefore it is most surprising that a polyamide 4.6/PET composition, including fibre reinforcement, should have a stiffness even exceeding that of fibre-reinforced polyamide 4.6, and does not present any processing problems.

The composition according to the invention comprises:

A. 5-95 parts by weight of polyamide 4.6

B. 95-5 parts by weight of polyethylene terephthalate, with A + B equalling 100 parts by weight

C. 1-100 wt.%, relative to A + B, of reinforcing fibre material.

A further advantage of the composition according to the invention compared with fibre-reinforced polyamide 4.6 is the unexpectedly significant improvement of the dimensional stability upon water absorption.

The polyamide 4.6 of the invention is a polyamide consisting substantially, that is for at least 50%, of tetramethylene adipamide units obtained by the condensation reaction starting from adipic acid or a functional derivative thereof and tetramethylene diamine or a functional derivative thereof. However, a part of the adipic acid or the tetramethylene diamine may be replaced with other components that can be co-condensed. The content of co-condensed other components may vary within a wide range, but is preferably limited so that stiffness and processability of the composition are not adversely affected. Other components that can be cocondensed are for instance, other diamines and dicarboxylic acids, ester-forming comonomers, imide-forming comonomers, lactams etc. Preferably the content is lower than 25% on a molar basis, and more preferably lower than 10%. Processes for the preparation of polyamide 4.6 are disclosed in, for instance, EP-B-0038094, EP-A-0039524, EP-B-0207539 (US-A-440762, 4408036 and 4722997, respectively).

The relative viscosity of the polymer is preferably at least 2.0 and at most 8.0, measured on a solution of 1 g in 100 ml $H_2SO_4$ at 25°C. Below 2.0 the mechanical strength obtained is generally insufficient, while above 8.0 the processability, in particular injection moulding of large parts, presents problems.

The polyethylene terephthalate of the invention is a polyester substantially composed of an acid component consisting of terephthalic acid and a diol, ethylene glycol. However, a part of the terephthalic acid may be replaced with other aromatic dicarboxylic acids, such as isophthalic acid, naphthalene dicarboxylic acid and derivatives thereof, and a part of the ethylene glycol may be replaced with another aliphatic diol, such as tetramethylene glycol, hexamethylene glycol and similar compounds. It is also possible to copolymerize a branched component, for instance 3- or 4-basic ester-forming acids such as trimellitic acid or 3- or 4-hydro-ester-forming alcohols such as glycerol, trimethylol propane and pentaerythritol. The branched component content is generally lower than 1 mol %, preferably lower than 0.5%, and more preferably lower than 0.3 mol %.

The intrinsic viscosity of the polyethylene terephthalate is at least 0.5, preferably at least 0.6, measured in o-chlorophenol at 35°C. The polyethylene terephthalate used in the composition of the invention can be produced by a customary process, for instance a poly-condensation in melt, optionally followed by a solid-phase post-condensation starting from terephthalic acid or an ester-forming derivative thereof and ethylene glycol.

The composition contains at least 5 parts by weight of component A or B per 100 parts by weight of A + B. Preferably the content is at least 10 parts by weight, more preferably at least 20 parts by weight of parts A or B per 100 parts by weight of parts A + B. The best combination of properties is achieved if the polyamide 4.6 content is higher than the polyethylene terephthalate content. The reinforcing fibre material content is at least 1 wt. % relative to the sum of A + B, preferably at least 5 wt. % and more preferably at least 10%. In principle the reinforcing fibre material may comprise any reinforcing fibre material, for instance inorganic and organic fibre materials. Examples of inorganic fibre materials are glass fibres, carbon fibres, steel fibres, ceramic fibres, potassium titanate whiskers and the like. A suitable organic fibre material is aramid. For economic reasons it is preferred to use glass fibres. In principle, other reinforcing materials having an effect comparable to that of fibres are also eligible, for instance fillers in the form of plates. Such fillers are also considered to be within the scope of the present invention. The maximum content of the reinforcing fibre material to be applied is limited by the processing properties of the composition and may be on the order of 60 to 100%. The factors which influence the percentage are, for example the form of the fibre material and the processing conditions.

The composition may further contain the usual additives, for instance flame retardants, anti-oxidants, UV-stabilizers, lubricants, colorants, pigments and antistatic agents in effective amounts. Use can also be made, in such minor amounts that the special properties of the composition are not significantly affected, of a third polymer, for instance another polyamide, a polyester, a polyphenylene, a polycarbonate, a polyalkene and copolymers thereof, a polystyrene and copolymers thereof, polyacrylate and copolymers thereof, a thermoelastic polyamide, a thermoelastic polyester and the like or a thermosetting resin, for instance a phenol resin, a melamine resin, an unsaturated polyester resin and the like, to modify other properties, for example, water adsorption or appearance.

The composition according to the invention can be prepared using any mixing technique. Optimum distribution of the components of the composition is preferred, and this can be achieved by mixing and homogenizing the components using mixing equipment such as a blender, a kneader, rolls and an extruder. The amounts and combinations of the components as well as the order of addition and number of mixing steps can be varied as desired. It is also possible to dry-blend all components followed by homogenization in an extruder by means of melting and kneading and to obtain the composition in the form of a strand, which can be chopped into pellets of the desired length.

The composition thus obtained is usually stored in dry condition and processed by means of, for instance, an injection moulding machine into the desired moulded parts. The constituent components of the composition can also be fed directly to the hopper of the injection moulding machine after dry-blending and can be processed there.

The invention will now be elucidated by means of the following examples, without however being restricted thereto.

Examples and comparative experiments

The compositions listed in Table 1 were obtained in a ZSK 30 mm twin-screw extruder at a temperature setting rising from 260 to 300°C, a speed of 250 rpm, and a throughput of 8-10 kg per hour. Using an injection moulding machine with a temperature setting of 300-305°C and a mould temperature of 80°C, the compositions were injection moulded into test rods. The table lists the properties of the resulting compositions.

Impact strength, Izod notched, according to ASTM D 256, $[kJ/m^2]$

Tensile modulus, ASTM D 638, at 25 °C, [MPa]

HDTA, heat deflection temperature, ASTM D 648 [°C]

Elongation at break, ASTM D 638, [%]

Tensile strength, at yield, ASTM D 638 [Mpa]

| | Comp. exp. 1 | Comp. exp. 2 | Comp. exp. 3 | Comp. Exp. 4 | Exp. I | Exp. II | Comp. exp. 5 | Comp. exp. 6 | Comp. exp. 7 |
|---|---|---|---|---|---|---|---|---|---|
| Polyamide 4.6[1]) parts by wt. | 100 | | 60 | 60 | 60 | 60 | 100 | | |
| REKO PET[2]) parts by wt. | | 100 | 40 | 40 | 40 | 40 | | | |
| PET (parts by wt.) | | | | | | | | 100[3]) | 100[4]) |
| Irganox 1098[5]) wt. % | 0.5 | | 0.5 | 0.5 | 0.5 | 0.5 | 0.5 | | |
| Compatibilizer[7]) wt. % | | | | 5 | | | | | |
| Glass fibre[6]) | | | | | 43 | 25 | 43 | 25 | 37 |
| Impact strength | 10 | 2 | 2 | 2 | 8 | 7 | 10 | 7 | 9 |
| Tensile modulus | 3000 | 2200 | 2900 | 2900 | 11200 | 8600 | 10000 | 7000 | 10000 |
| HDTA | 160 | 70 | 80 | 75 | 251 | 241 | >280 | 225 | 225 |
| Elongation at break | 30 | 300 | 2[*]) | 20 | 2 | 2.5 | 3.5 | 2.5 | 2.5 |
| Tensile strength | 100 | 55 | 75 | 70 | 175 | 145 | 200 | 145 | 175 |

1) STANYL KS300[R], commercial unstabilized product, relative viscosity = 3.3, from DSM, the Netherlands

2) REKO PET[R], commercial amorphous product from REKO, the Netherlands, obtained by processing of PET bottles.

3) Arnite AV2 343, AKZO, the Netherlands

4) Arnite AV2 340, AKZO, the Netherlands

5) Stabilizer from Ciba Geigy, Switzerland

6) Silenka 8044, a commercial product from Silenka, the Netherlands 1 = 4.5 mm, d = 10 $\mu$

7) Denka IP MS-N, a styrene-maleïmide of Denka Showa, Japan

*) highly non homogeneous

From the measured properties it is apparent that, in contrast with PA 4.6/PET compositions with and without compatibilizer, the compositions according to the invention (examples I and II) yield an improvement in tensile modulus compared with the corresponding composition containing only PA 4.6 (comp. exp. 5). This result is all the more surprising since the PET used in the examples is amorphous and has been obtained by reprocessing PET bottles.

Example III

By injection moulding of the composition of example I, a splash shield for a car was produced, its maximum dimension being approximately 1 m and its length/thickness ratio approximately 200. The resulting object was easily released from the mould and had no deformations after cooling. Its surface was very smooth, without any burning phenomena.

**Claims**

1. Polyamide-polyester composition comprising:
   A. 5-95 parts by weight of polyamide 4.6
   B. 95-5 parts by weight of polyethylene terephthalate, with A + B equalling 100 parts by weight
   C. 1-100 wt. %, relative to A + B, of reinforcing fibre material.

2. Composition according to claim 1, characterized in that component B is obtained by upgrading of waste polyethylene terephthalate.

3. Composition according to claim 1 or claim 2, characterized in that the composition contains 10-90 parts by weight of A and B.

4. Composition according to claim 3, characterized in that the composition contains 20-80 parts by weight of A and B.

5. Composition according to claim 4, characterized in that the composition contains 50-80 parts by weight of A and 50-20 parts by weight of B.

6. Composition according to any of the preceding claims, characterized in that the composition contains at least 5 wt. % C.

7. Composition according to claim 6, characterized in that the composition contains at least 10 wt. % C.

8. Composition according to any of the preceding claims, characterized in that the reinforcing fibre material is glass fibre.

9. Composition according to claim 1, characterized in that at least 90%, on a molar basis, of the polyamide 4.6 consists of tetramethylene adipamide units.

10. Structural part consisting essentially of the composition of any of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | PATENT ABSTRACTS OF JAPAN, vol. 11, no. 13 (C-397), 14th January 1987; & JP-A-61 188 445 (ASAHI CHEM.) 22-08-1986 ----- | 1-10 | C 08 L 77/00<br>C 08 L 67/02 |

**TECHNICAL FIELDS SEARCHED (Int. Cl.5)**

C 08 L

The present search report has been drawn up for all claims

| Place of search | Date of completion of the search | Examiner |
|---|---|---|
| THE HAGUE | 29-05-1992 | LEROY ALAIN |